# EUROPEAN PATENT SPECIFICATION

(11) **EP 1 914 136 B1**
(45) Date of publication and mention of the grant of the patent: **06.05.2009**
(21) Application number: 07118051.7
(22) Date of filing: 08.10.2007
(51) Int. Cl.: B60T 13/22

(54) **Parking brake, particularly for a farm tractor, with a safety device**
Feststellbremse mit Sicherheitsvorrichtung, im Besonderen für einen Ackerschlepper
Frein à main, en particulier pour tracteur agricole, doté d'un dispositif de sécurité

(30) Priority: 16.10.2006 IT BO20060714
(43) Date of publication of application: 23.04.2008
(73) Proprietor: CNH Italia S.p.A., 41100 Modena (IT)
(72) Inventor: Benedetti, Giorgio, 41100, Modena (IT); Vescovini, Maurizio, 41012 (MO), Carpi (IT)
(74) Representative: CNH IP Department

(56) References cited:
- EP-A- 1 516 791
- EP-A- 1 541 438
- US-A- 3 613 839

## Description

The present invention relates to a parking brake, in particular for a farm tractor, activated mechanically by a number of Belleville washers, and released hydraulically by pressurized oil. The parking brake also has a safety device to prevent sudden uncontrolled engagement of the brake, when the vehicle is moving, as a result of various factors, such as blackout, turning off the engine, or simply a fall in oil pressure in the main hydraulic circuit.

EP 1 541 438 describes a prior art parking brake device.

It is an object of the present invention to provide a valve assembly for regulating oil flow according to the desired parking mode ("parking on" or "parking off"), and which, in "parking off" mode, maintains the oil inside the Belleville washer cylinder under pressure even when the main solenoid valve is not controlled electrically, or when the hydraulic pressure in the circuit falls suddenly for any reason.

The present invention may be used to particular advantage, though not exclusively, in a farm tractor, to which the following description refers purely by way of example.

According to the present invention, there is provided a parking brake, in particular for a farm tractor, with a safety device, as claimed in the accompanying Claims.

A non-limiting embodiment of the present invention will be described by way of example with reference to the accompanying drawings, in which:
Figure 1 shows a three-dimensional view of a parking brake in accordance with the present invention;
Figure 2 shows a partial section of the Figure 1 parking brake;
Figure 3 shows a number of larger-scale details of the Figure 1 and 2 parking brake;
Figure 4 shows the component parts of a valve assembly of the Figure 1, 2 and 3 parking brake;
Figure 5 shows a first configuration of the Figure 4 valve assembly;
Figure 6 shows a second configuration of the Figure 4 valve assembly;
Figure 7 shows the configuration switch of the Figure 4 valve assembly in the event, for example, of a blackout.

It should be pointed out that the following description deals solely with details essential to a clear understanding of the present invention.

Number 10 in the accompanying drawings indicates as a whole a parking brake in accordance with the present invention.

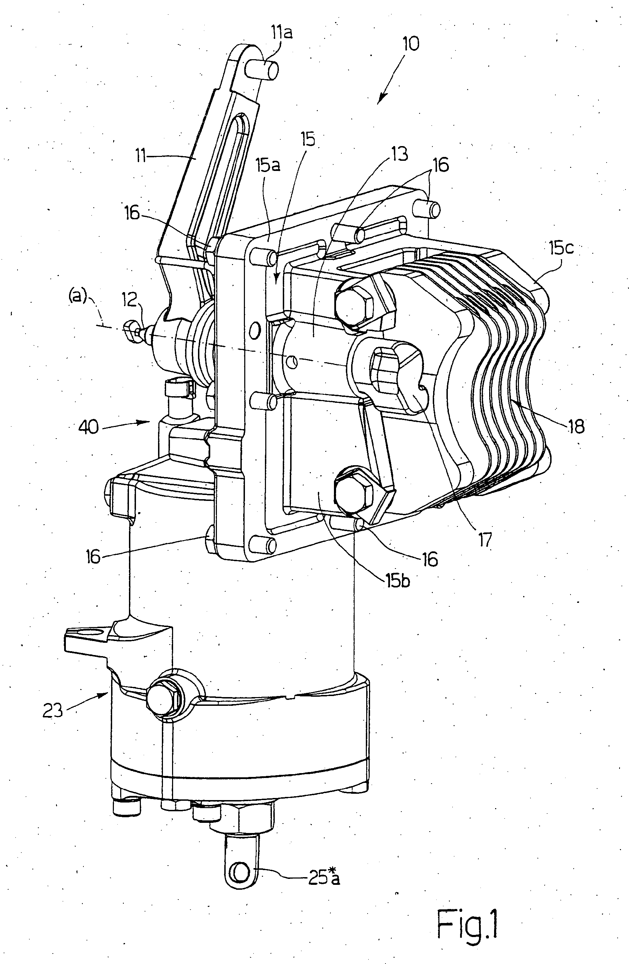

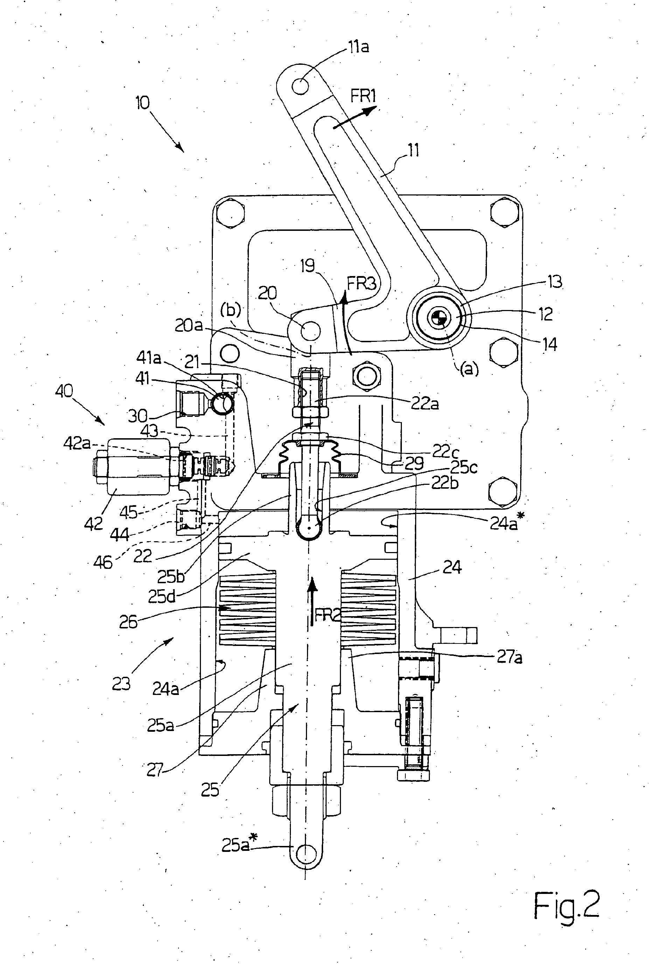

Parking brake 10 comprises, in known manner, a lever 11 (with a pin 11a) rotating about an axis of rotation (a) (Figures 1, 2).

A shaft 12 (Figure 1) is integral with lever 11, and has a longitudinal axis of substantial symmetry defined by axis of rotation (a). Shaft 12 is housed inside a sleeve 13 fitted with bushings 14 (Figure 2). As shown in Figure 1, sleeve 13 is formed in one piece with a monobloc supporting structure 15 having bolts 16 for fixing parking brake 10 to the rear transmission housing (not shown) of the tractor.

More specifically, monobloc supporting structure 15 comprises a first plate 15a substantially perpendicular to axis (a); a second plate 15b substantially perpendicular to first plate 15a and supporting sleeve 13; and a third plate 15c, also perpendicular to plate 15a and therefore parallel to plate 15b.

The distal end of shaft 12 has a cam member 17, which acts on a pack of movable sectors 18 interposed between plates 15b and 15c (Figure 1). The pack of movable sectors 18 acts, in known manner by means of mechanical members not shown, on the pinion of the rear wheels to exert the desired braking force on the rear wheels.

The operator can therefore activate parking brake 10 by rotating lever 11 (Figure 2) (e.g. by exerting pull on a Bowden cable (not shown) fixed at one end to pin 11a; see below) in the direction indicated by arrow FR1 (Figure 1) to grip the pack of movable sectors 18 and so exert braking force on the pinion of the rear wheels (not shown). Lever 11 can be rotated, and therefore braking force exerted on the pinion, either by means of said Bowden cable (not shown) fixed at one end to pin 11a, or by means of a device as described below.

As shown in more detail in Figure 2, lever 11 is also integral with a connecting rod 19 also hinged about axis (a). The distal end of connecting rod 19 has an articulated joint 20 to which is hinged a fork 20a having a longitudinal axis (b) of substantial symmetry. At the opposite end to that hinged to articulated joint 20, fork 20a has a threaded hole 21.

A push rod 22 is also provided, which comprises a rod 22a (also of axis (b) of substantial symmetry); a head 22b; and a bellows fastener 22c roughly halfway along rod 22a and perpendicular to axis (b). Rod 22a is screwed partly inside threaded hole 21.

As shown in Figures 1 and 2, beneath fork 20a is provided a hydraulic cylinder assembly 23, which, as will be seen, also controls parking brake 10 automatically. Hydraulic cylinder assembly 23 comprises a cylinder 24 defining a chamber 24a. Chamber 24a houses a piston 25 stressed by a pack of Belleville washers 26 (see below).

More specifically, in the section shown in Figure 2, piston 25 substantially comprises a central body 25a; a top portion 25b, in turn having a cavity 25c; and a guide and sealing member 25d.

As shown in Figure 2, the bottom portion of central body 25a slides inside a cylindrical guide 27 projecting inside chamber 24a; and the pack of Belleville washers 26 is located between one end 27a of cylindrical guide 27 and guide member 25d. As further shown in Figure 2, head 22b and part of rod 22a are housed inside cavity 25c. More specifically, head 22b rests on the bottom of cavity 25c.

Push rod 22 acts as an intermediate transmission member between fork 20a and piston 25, and is detached from piston 25. A first end of a bellows 29 is fitted to bellows fastener 22c; and a second end of bellows 29 is secured to the top of cylinder 24.

In the Figure 2 configuration, portion 24a* of chamber 24a contains pressurized oil, meaning that the device is in the parking position. Belleville washers 26 are therefore partly compressed between end 27a and guide member 25d, and transmit their force to piston 25 in the direction of arrow FR2.

When pressure on them is released, Belleville washers 26 open and push piston 25 upwards in the direction of arrow FR2. This produces a corresponding upward movement of push rod 22 and fork 20a, thus rotating connecting rod 19 in the direction of arrow FR3.

Since, as stated, connecting rod 19 and lever 11 are integral with each other, lever 11 rotates in the direction of arrow FR1, thus producing all the related braking phenomena on movable sectors 18, as described previously relative to manual operation.

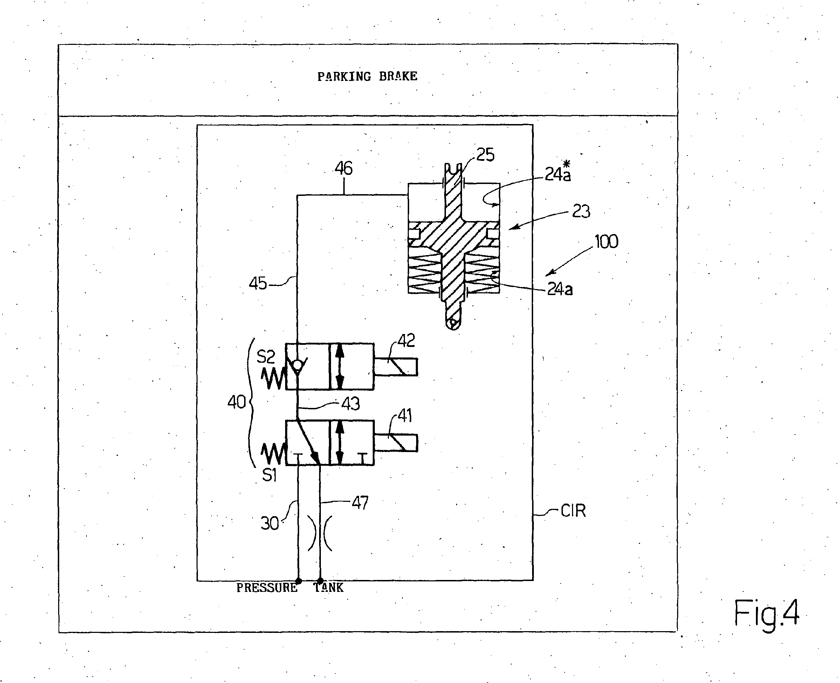

Moreover, as shown in particular in Figure 2, hydraulic cylinder assembly 23 has a pressurized-oil inlet 30 connected to a pressurized-oil distribution circuit CIR (Figure 4).

Hydraulic cylinder assembly 23 also has a valve assembly 40 comprising a first solenoid valve 41 (housed in a respective seat 41a; Figure 2), and a second solenoid valve 42 (housed in a respective seat 42a; Figure 2) connected to each other hydraulically by a conduit 43 (Figure 2). As shown in Figure 2, seat 42a is connected to an inlet 44 of a hand pump (not shown) by a conduit 45. Finally, inlet 44 has an opening 46 in portion 24a* of chamber 24a.

Oil directly from hydraulic circuit CIR (through inlet 30, conduits 43, 45, inlet 44, and opening 46) or oil pumped by the hand pump (directly through inlet 44 and opening 46) therefore flows in or out through opening 46.

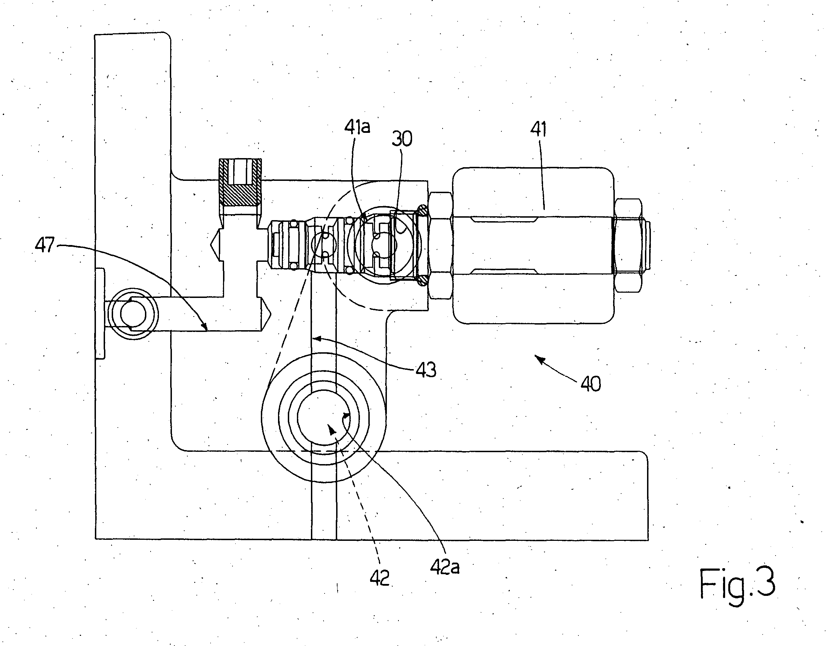

As shown in Figure 3, a drain conduit 47 extends from seat 41a and, as will be seen below, is open or closed depending on the position of the slides of solenoid valve 41.

It should also be pointed out that a Bowden cable (not shown) is connected to the bottom end 25a* of central body 25a to release the brake mechanically.

In short, parking brake 10 can be activated either manually, acting directly on lever 11, or automatically, by releasing the pressure inside cylinder 24 to push piston 25 upwards by means of the pack of Belleville washers 26.

Figure 4 shows a hydraulic arrangement 100 of parking brake 10 according to the present invention. Many of the details in hydraulic arrangement 100 have already been described. Hydraulic arrangement 100 comprises circuit CIR for distributing pressurized oil to a number of user devices (not shown) on the tractor.

Also shown are inlet 30 (shown schematically in Figure 4 as a segment); first solenoid valve 41 connected hydraulically to second solenoid valve 42 by conduit 43; and conduits 45, 46 between second solenoid valve 42 and hydraulic cylinder assembly 23.

Hydraulic arrangement 100 in Figure 4 also comprises drain conduit 47, inside cylinder 24, for draining oil into the transmission housing which acts as a tank (not shown).

It should be pointed out that, in known hydraulic arrangements for this type of application (parking brakes, in particular for farm tractors), only first solenoid valve 41 (with two slides 41b, 41c) is provided.

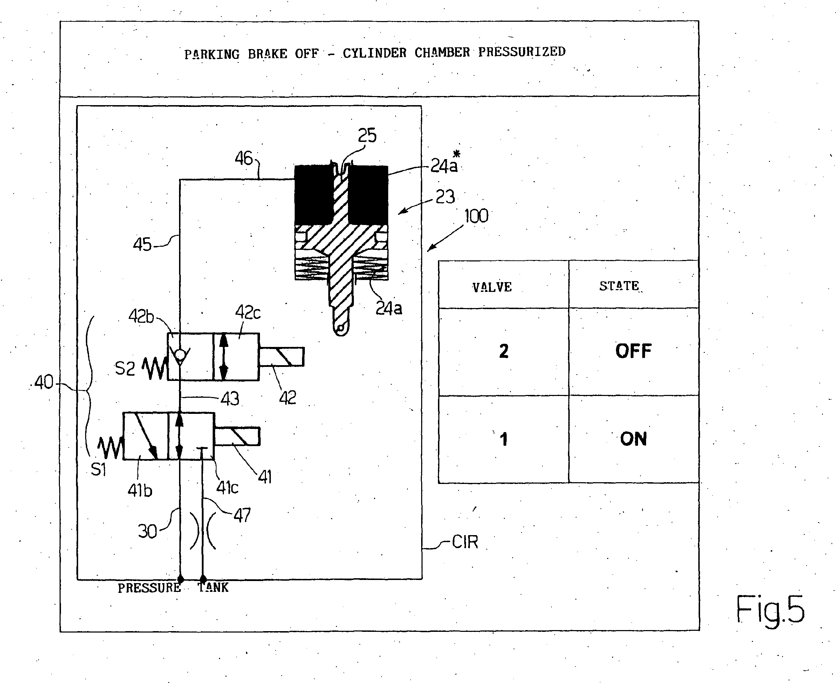

In which case, when solenoid valve 41 is energized to the "ON" position in Figure 5, thus compressing a spring S1, portion 24a* of chamber 24a is pressurized, and piston 25 moves down to release movable sectors 18 (Figure 1), thus releasing parking brake 10.

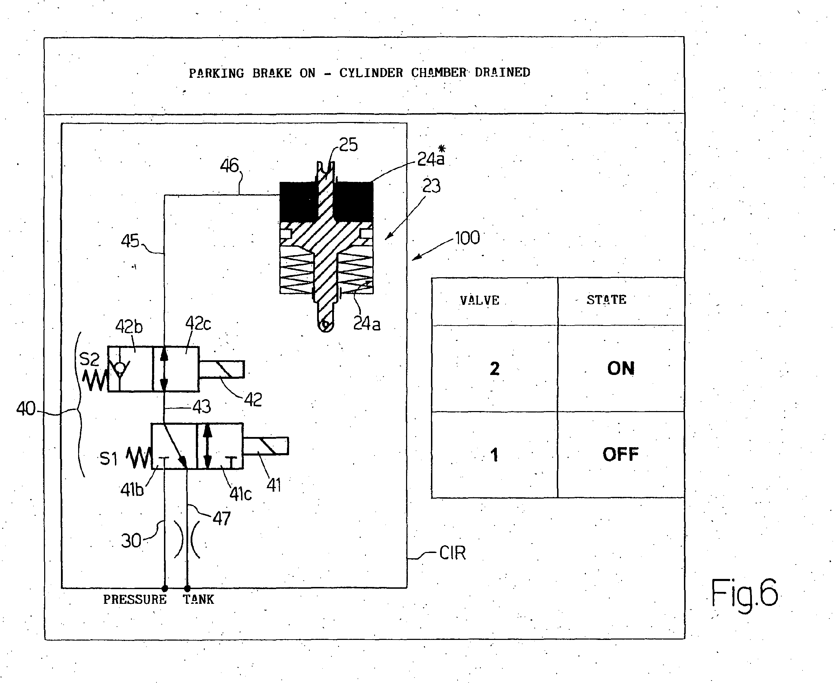

The tractor is obviously braked by simply gripping movable sectors 18 by draining the oil along drain conduit 47, as shown in Figure 6 (considering solenoid valve 41 only).

Now let us consider what happens when the tractor is turned off at a given speed, thus resulting in a fall in pressure in circuit CIR, or in the event of a blackout. In this case, solenoid valve 41 is deenergized and returns to the drain configuration in Figure 6. In this case, the parking brake (Figure 6) is activated (in totally uncontrolled manner), thus resulting in sharp braking of the tractor (which is obviously to be avoided at all cost).

A second safety solenoid valve 42 (with slides 42b, 42c) has therefore been provided between first solenoid valve 41 and hydraulic cylinder assembly 23.

In the Figure 5, 6, 7 embodiment of the present invention, therefore, to pressurize portion 24a* of chamber 24a (brake released), only solenoid valve 41 need be energized ("ON" position) so that slides 41c and 42b are aligned (Figure 5). Since, in this case, solenoid valve 42 has not been energized ("OFF" position), the pressurized oil is allowed into portion 24a* of chamber 24a, thus compressing guide member 25d and therefore also the pack of Belleville washers 26.

To drain portion 24a*, only solenoid valve 42 is energized ("ON" position), while solenoid valve 41 is deenergized ("OFF" position), so that slide 41b is aligned with slide 42c (Figure 6).

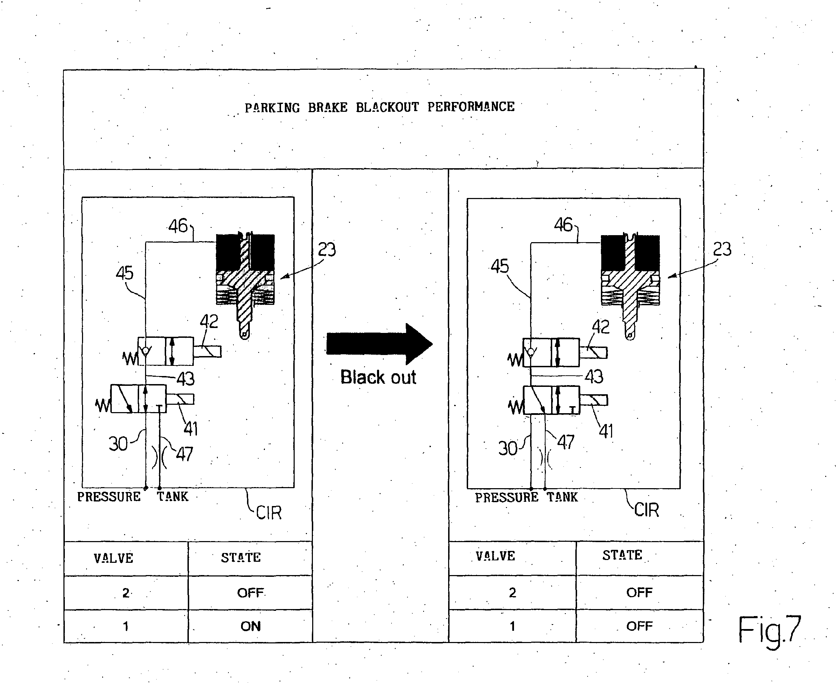

In the event of blackout of the tractor for any reason, current is cut off to solenoid valves 41, 42, which therefore both remain in the "OFF" position, with slide 41b aligned with slide 42c, and slide 41c aligned with slide 42c (Figure 7).

In other words, a blackout causes the system to switch from the Figure 5 configuration to the Figure 4 configuration as shown in Figure 7. The one-way valve in slide 42b of solenoid valve 42 keeps the drain closed, thus keeping the chamber pressurized and the parking brake off.

By adding a safety solenoid valve 42 to solenoid valve assembly 40, a system is achieved which is intrinsically safer in the event of a blackout or a fall in hydraulic system pressure.

## Claims

1. A motor vehicle parking brake (10), in particular for farm tractors, comprising an electromechanical and hydraulic device (11, 19, 23, 40) for gripping a pack of movable sectors (18) connected mechanically to the wheels to exert, on command, the desired braking force on the wheels; and
**characterized in that** the parking brake (10) comprises an oil flow regulating valve assembly (40) forming part of said electromechanical and hydraulic device (11, 19, 23, 40) and in turn comprising a first control solenoid valve (41) and a second safety solenoid valve (42) in series with each other.

2. A parking brake (10) as claimed in Claim 1, wherein said electromechanical and hydraulic device (11, 19, 23, 40) also comprises a hydraulic circuit (CIR), which supplies a hydraulic cylinder assembly (23) in turn comprising a cylinder (24) defining a chamber (24a) housing a piston (25) stressed by a pack of Belleville washers (26); said cylinder (24) being operative to activate or deactivate a pack of movable sectors (18) connected mechanically to a pinion of the wheels to exert the desired braking force on the wheels.

3. A parking brake (10) as claimed in Claim 2, wherein, when said control solenoid valve (41) is set to an "ON" position, a portion (24a*) of said chamber (24a) is pressurized, and said piston (25)' moves to release said pack of movable sectors (18) and so deactivate the parking brake (10); said safety solenoid valve (42) being in an "OFF" position.

4. A parking brake (10) as claimed in Claim 3, wherein, to drain said portion (24a*) of said chamber, only the safety solenoid valve (42) is energized to the "ON" position, and said control solenoid valve (41) is deenergized to an "OFF" position.

5. A parking brake (10) as claimed in Claim 1, wherein, in the event of any undesired fall in pressure in the hydraulic circuit (CIR), electric current is cut off to the solenoid valves (41, 42), which therefore both remain in the "OFF" position.

## Patentansprüche

1. Feststellbremse (10) für ein Motorfahrzeug, insbesondere für Ackerschlepper, mit einer elektromechanischen und hydraulischen Vorrichtung (11, 19, 23, 40) zum Einspannen eines Stapels von beweglichen Sektoren (18), die mechanisch mit den Rädern verbunden sind, um auf Befehl die gewünschte Bremskraft auf die Räder auszuüben; und
**dadurch gekennzeichnet, dass** die Feststellbremse (10) eine Ölströmungs-Regelventil-Baugruppe (40) umfasst, die einen Teil der elektromechanischen und hydraulischen Vorrichtung (11, 19, 23, 40) bildet und ihrerseits ein erstes Steuer-Magnetventil (41) und ein zweites Sicherheits-Magnetventil (42) in Serie miteinander umfasst.

2. Feststellbremse (10) nach Anspruch 1, bei der die elektromechanische und hydraulische Vorrichtung (11, 19, 23, 40) weiterhin einen Hydraulikkreis (CIR) umfasst, der eine Hydraulikzylinder-Baugruppe (23) speist, die ihrerseits einen Zylinder (24) umfasst, der eine Kammer (24a) bildet, die einen Kolben (25) aufnimmt, der durch einen Stapel von Tellerfedern (26) vorgespannt ist; wobei der Zylinder (24) betreibbar ist, um einen Stapel von beweglichen Sektoren (18) zu aktivieren oder zu deaktivieren, die mechanisch mit einem Zahnrad der Räder verbunden sind, um die gewünschte Bremskraft auf die Räder auszuüben.

3. Feststellbremse (10) nach Anspruch 2, bei der beim Einstellen des Steuer-Magnetventils (41) auf eine "EIN"-Position ein Abschnitt (24a*) der Kammer (24a) mit Druck beaufschlagt wird und der Kolben (25) sich zur Freigabe des Stapels von beweglichen Sektoren (18) bewegt, um damit die Feststellbremse (10) zu deaktivieren; wobei sich das Sicherheits-Magnetventil in einer "AUS"-Position befindet.

4. Feststellbremse (10) nach Anspruch 3. bei der zum Entlasten des Abschnitts (24a*) der Kammer lediglich das Sicherheits-Magnetventil (42) auf die "EIN"-Position angesteuert wird und das Steuer-Magnetventil (41) auf eine "AUS"-Stellung abgeschaltet ist.

5. Feststellbremse (10) nach Anspruch 1, bei der im Fall eines unerwünschten Druckabfalls in dem Hydraulikkreis (CIR) der elektrische Strom an die Magnetventile (41, 42) abgeschaltet wird, die daher beide in der "AUS"-Stellung bleiben.

## Revendications

1. Frein de stationnement pour véhicule à moteur (10), notamment pour tracteurs agricoles, comprenant un dispositif électromécanique et hydraulique (11, 19, 23, 40) destiné à serrer un ensemble de secteurs mobiles (18) connectés mécaniquement aux roues pour exercer, sur commande, la force de freinage souhaitée sur les roues, et
**caractérisé en ce que** le frein de stationnement (10) comprend un organe complet de vanne de régulation du flux d'huile (40) formant une partie dudit dispositif électromécanique et hydraulique (11, 19, 23, 40) et comprenant à son tour une première électrovanne de régulation (41) et une seconde électrovanne de sécurité (42) disposées en série l'une par rapport à l'autre.

2. Frein de stationnement (10) selon la revendication 1, **caractérisé en ce que** le dispositif électromécanique et hydraulique (11, 19, 23, 40) comprend également un circuit hydraulique (CIR), qui alimente un ensemble de vérin hydraulique (23) comprenant à son tour un vérin (24) définissant une chambre (24a) renfermant un piston (25) contraint par un empilement de rondelles Belleville (26), ledit vérin (24) pouvant fonctionner pour actionner ou désactiver un ensemble de secteurs mobiles (18) connectés mécaniquement à un pignon des roues pour exercer la force de freinage souhaitée sur les roues.

3. Frein de stationnement (10) selon la revendication 2, **caractérisé en ce que,** quand ladite électrovanne de régulation (41) est réglée sur une position « ON », une portion (24a*) de ladite chambre (24a) est mise sous pression, et ledit piston (25) se déplace pour relâcher ledit ensemble de secteurs mobiles (18) et désactiver ainsi le frein de stationnement (10), ladite électrovanne de sécurité (42) étant dans une position « OFF ».

4. Frein de stationnement (10) selon la revendication 3, **caractérisé en ce que,** pour drainer ladite portion (24a*) de ladite chambre, seule l'électrovanne de sécurité (42) est excitée en position « ON », et ladite électrovanne de régulation (41) est désexcitée en position « OFF ».

5. Frein de stationnement (10) selon la revendication 1, **caractérisé en ce que,** en cas de chute de pression non souhaitée dans le circuit hydraulique (CIR), le courant électrique est coupé vers les électrovannes (41, 42), qui en conséquence demeurent toutes deux en position « OFF ».
